# EUROPÄISCHE PATENTSCHRIFT

(11) **EP 0 450 193 B1**
(45) Veröffentlichungstag und Bekanntmachung des Hinweises auf die Patenterteilung: **09.02.1994**
(21) Anmeldenummer: 90125445.8
(22) Anmeldetag: 24.12.1990
(51) Int. Cl.: B60R 16/02

(54) **Kraftfahrzeugkommunikationszentrale**
Vehicle communication central
Centrale de communication d'un véhicule

(30) Priorität: 28.03.1990 DE 4009900
(43) Veröffentlichungstag der Anmeldung: 09.10.1991
(73) Patentinhaber: Blaupunkt-Werke GmbH, 31132 Hildesheim (DE)
(72) Erfinder: Attig, Joachim, W-3200 Hildesheim (DE); Kässer, Jürgen, Dr., W-3200 Hildesheim (DE); Liman, Helmut, W-3201 Klein Escherde (DE); Scholz, Matthias, W-3200 Hildesheim (DE)

(56) Entgegenhaltungen:
- EP-A- 0 056 587
- DE-A- 3 236 724
- FR-A- 2 533 513
- US-A- 4 797 924

## Beschreibung

Gegenstand des Schutzrechtes ist eine neue Kraftfahrzeugkommunikationszentrale, an die zum Beispiel Autoradios, Autotelefone, Autofunkgeräte, wie auch Gebläse und andere im Kraftfahrzeuginnenraum akustisch wirksam werdende Geräte anschließbar sind.

Aus dem Stand der Technik, z. B. EP-A-56587, ist die Steuerung von Zusatzgeräten in Kraftfahrzeugen durch Sprachbefehle bekannt. Die Steuereinheiten dieser Geräte umfassen ein im Kraftfahrzeuginnenraum angeordnetes Mikrofon und eine Sprachbefehlerkennungsschaltung. Befinden sich neben diesen Geräten Autoradios, Taxifunksprechgeräte oder auch Gebläse im Fahrzeug, die im Innenraum akustisch wirksam werden, dann besteht die Gefahr, daß vom Fahrer gegebene Sprachbefehle von der Erkennungsschaltung nicht erkannt werden oder Gesprächsinhalte oder Sendungsinhalte als Befehle ausgewertet werden. Ferner besteht die Gefahr, daß die Eingabe eines mehrere Teilbefehle - z. B. die Ziffern einer Zahl - umfassenden Sprachbefehls bei einer kritischen Verkehrssituation abgebrochen wird und der ganze Befehl nach Normalisierung der Verkehrssituation wiederholt werden muß.

In der europäischen Patentanmeldung EP-A-452 565 ist der Vorschlag gemacht, während der Eingabe des Sprachbefehls die im Fahrzeuginneren akustisch wirksam werdenden Geräte für eine vorgegebene Zeitdauer stillzusetzen oder stummzuschalten. Hierbei ergeben sich Probleme, wenn der Befehl die Veränderung der Einstellung eines akustisch wirksamen Gerätes bewirken soll, z. B. die Einstellung der Lautstärke, da sich auch bei stummgeschalteten Geräten bis zur Erkennung des Sprachbefehls die Lautstärke weiter verändert.

Der Erfindung liegt die Aufgabe zugrunde, die Ausführung von Sprachbefehlen, die eine kontinuierliche Veränderung der Einstellung von Reglern zur Folge haben, sicherer zu machen.

Die Aufgabe wird durch die im Patentanspruch genannten Merkmale gelöst.

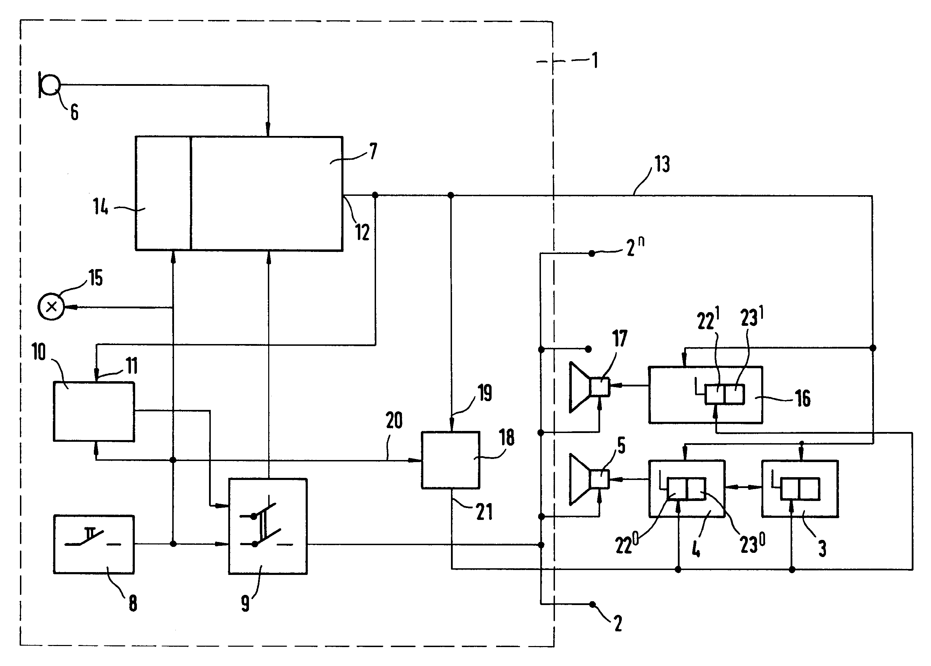

Anhand der Zeichnung wird ein Ausführungsbeispiel näher erläutert. Die Kraftfahrzeugkommunikationszentrale 1 weist Anschlüsse 2 .... .....2ⁿ für Geräte auf, die im Kraftfahrzeuginnenraum akustisch wirksam werden; z. B. ein Autotelefon, das über einen Sender 3 mit einer Freisprecheinrichtung und einen Empfänger 4 mit einem Lautsprecher 5 verfügt. Die Zentrale 1 umfaßt ein Mikrofon 6 und eine Sprachbefehlserkennungsschaltung 7. Ferner gehört zur Zentrale 1 ein von Hand betätigbarer und im Kraftfahrzeug an einer leicht und bequem zugänglichen Stelle angeordnete Impulsschalter 8 und ein von diesem gesteuerter Koppelschalter 9. Bei der ersten Betätigung des Impulsschalters 8 wird über den Koppelschalter 9 die Sprachbefehlserkennungsschaltung 7 eingeschaltet und der Lautsprecher 5 des Autotelefons sowie die Schallwellen erzeugenden Teile der anderen Geräte ausgeschaltet.
Zugleich wird durch den Impulsschalter 8 ein Zeitglied 10 gestartet. Am Ende seiner Standzeit setzt das Zeitglied 10 den Koppelschalter 9 in seine Ausgangslage zurück und schaltet damit die Spracherkennungsschaltung 7 ab und den Lautsprecher 5 des Autotelefons ein.

Das Zeitglied 10 weist einen Regeleingang 11 auf, über den eine gegenüber einer Sollstandzeit kürzere oder eine längere Standzeit des Zeitgliedes 10 eingestellt werden kann. Bei Regelung auf eine kürzere Standzeit wird die vom Impulsschalter 8 eingeleitete Sollstandzeit abgebrochen, bei Regelung auf eine längere Standzeit wird die laufende Sollstandzeit ebenfalls abgebrochen, jedoch gleichzeitig eine neue Sollstandzeit eingeleitet. Der Regeleingang 11 des Zeitgliedes ist an den Ausgang 12 der Sprachbefehlserkennungsschaltung 7 angeschlossen, an dem ein Quittiersignal abnehmbar ist.

Löst der Sprachbefehl die Verstellung von Reglern aus, z. B. des Lautstärkereglers, dann erfolgt die Verstellung üblicherweise schrittweise. Dazu werden in der Regel Stellimpulse in einem Zähler gezählt. Der Zählerstand bestimmt dann die Einstellung des Reglers. Wird nun das Gerät zur Eingabe des Stoppbefehls erneut stummgeschaltet, dann wird ohne weitere Maßnahmen während der Zeitdauer, die zur Erkennung des Stoppbefehls erforderlich ist, die Verstellung des Reglers schrittweise weitergehen.

Zur Vermeidung dieses Nachteils ist ein Steuerblock 18 vorgesehen, dessen einer Eingang 19 mit dem Datenbus 13 und dessen zweiter Eingang 20 mit dem Impulsschalter 8 verbunden ist. Der Ausgang 21 des Steuerblocks 18 steuert Torschaltungen 22, in den an den Datenbus 13 angeschlossenen Geräten, die im Eingang der Zähler 23 für die Reglerstellung angeordnet sind.

Der Steuerblock 18 ist derart ausgelegt, daß er aktiviert wird, sobald über den Datenbus 13 ein Stellbefehl für einen Regler in einem der vom Datenbus angesteuerten Geräte ausgegeben wird.

Ist die entsprechend dem Stellbefehl erwünschte Reglerstellung erreicht, dann muß ein entsprechender Stoppbefehl ausgesprochen werden. Dazu ist wieder der Impusschalter 8 zu betätigen, der die eingangs genannte Schaltfolge über den Koppelschalter 9 auslöst.

Bei der Betätigung des Impulsschalters 8 werden aber bereits die Torschaltungen 22 in den Eingängen der Zähler 23 gesperrt, so daß während der Erkennungszeit für den Sprachbefehl keine Verstellung der Regler mehr erfolgt.

Ist der Stoppbefehl erkannt, dann wird die Reglerverstellung in bekannter Weise abgebrochen. Zugleich wird auch der Steuerblock 18 deaktiviert.

## Patentansprüche

1. Kraftfahrzeugkommunikationszentrale mit Anschlüssen für ein oder mehrere im Kraftfahrzeuginnenraum akustisch wirksam werdenden Geräten, wobei die Zentrale ein im Kraftfahrzeuginnenraum angeordnetes Mikrofon und eine Sprachbefehlserkennungsschaltung umfaßt, dadurch gekennzeichnet, daß in den Eingängen von durch Stellimpulse verstellbaren Reglern (23) in den Geräten Torschaltungen (22) angeordnet sind, die durch einen Steuerblock (18) sperrbar sind und daß der Steuerblock (18) über den von der Sprachbefehlserkennungsschaltung (7) gespeisten Datenbus durch einen Regelbefehl aktivierbar ist und bei der nachfolgenden Betätigung eines Impulsschalters (8) die Torschaltungen (22) sperrt.

## Claims

1. Vehicle communications centre having connections for one or more items of equipment operating acoustically in the interior of the motor vehicle, the centre comprising a microphone, arranged in the interior of the motor vehicle, and a voice-command detection circuit, characterized in that arranged in the inputs of controllers (23), adjustable by actuating pulses, in the items of equipment there are gate circuits (22), which can be blocked by a control block (18), and in that the control block (18) can be activated by a control command via the data bus (13), fed from the voice-command detection circuit (7), and upon the subsequent actuation of a pulse switch (8) the gate circuits (22) block.

## Revendications

1. Centrale de communication de véhicule avec des bornes pour un ou plusieurs appareils à effet acoustique à l'intérieur du véhicule automobile, la centrale comprenant un micro placé à l'intérieur du véhicule et un circuit de reconnaissance de voix, centrale caractérisée en ce que les entrées des organes de réglage (23) réglables par des impulsions de commande comportent dans les appareils, les circuits de portes (22) qui peuvent être bloqués par un bloc de commande (18) et ce bloc (18) est activé par le bus de données (13) alimenté par un circuit de reconnaissance d'ordres vocaux (7) et qui ferme les portes (22) lors de l'actionnement consécutif d'un commutateur d'impulsion 8.
